# EUROPEAN PATENT APPLICATION

(11) **EP 4 467 489 A1**
(43) Date of publication of application: **27.11.2024**
(21) Application number: 24178096.4
(22) Date of filing: 24.05.2024
(51) Int. Cl.: B65G 47/71

(54) **DIVERTER APPARATUS FOR ACCUMULATION/TRANSFER OF ARTICLES**

(30) Priority: 25.05.2023 IT 202300010653
(71) Applicant: Vetromeccanica S.r.l.-societa' Unipersonale, 43024 Neviano degli Arduini (PR) (IT)
(72) Inventor: SETTI, Antonio, 43024 NEVIANO DEGLI ARDUINI (PR) (IT); PREDELLI, Gian Luca, 43024 NEVIANO DEGLI ARDUINI (PR) (IT)
(74) Representative: Dallaglio, Fabrizio

(57) **Abstract**

A diverter apparatus (100) adapted to divert a flow of articles (500) from a conveyor (110, 120) to a plurality of accumulating/transferring channels (130), and vice versa, wherein said diverter apparatus (100) comprises an outer device (200) and an inner device (300) arranged so as to define a transferring channel (400) for the passage of the articles (500), said diverter apparatus (100) being movable along the conveyor (110, 120) so as to arrange the transferring channel (400) in communication with each accumulating/transferring channel (130), characterized in that said outer device (200) and/or inner device (300) comprises an adjusting device (210, 310) to change the size of said transferring channel (400) and adapt it to the article (500) size.

## Description

### FIELD OF APPLICATION OF THE INVENTION

The present invention relates to the field of systems for the accumulation/transfer of articles such as, for example bottles, cans, vases, glasses, bricks, and more generally containers, in lines adapted to the production and/or filling and/or packaging and/or storage of said articles.

### STATE OF THE ART

The production and/or filling and/or packaging and/or storage lines of containers comprise a plurality of machines arranged according to a sequence imposed by the production/filling/ packaging process (e.g., blowing, filling, labelling, palletizing machine, etc.).

Said machines are connected to each other by conveyor belts that allow the transit of said articles, from a machine to the next one. During operation, said machines may have downtimes for the replenishment of consumables, or for short maintenances; these stops of the single machines, if prolonged, may cause consequent stops of the production line, thus compromising its productivity.

In order to avoid this problem, action is taken by creating articles accumulation/transfer zones, between a machine and the next one.

Said articles accumulation/transfer zones must be able to contain the articles processed by the machines upstream, during the downtime of the machines downstream.

Generally, said accumulated articles are returned to the line upon the re-start of the above-mentioned machines downstream.

Different kinds of accumulation devices are known to the state of the art.

For example, there are accumulation devices that comprise a supply conveyor, an accumulation table, and an output conveyor. The accumulation table may comprise multiple storage paths, i.e., multiple parallel conveyors.

A first diverter apparatus brings the products or articles, from the supply conveyor to the accumulation table, and in particular, time after time, to one of the parallel conveyors.

A second diverter apparatus brings the products or articles, from the accumulation table, in particular, time after time, from the parallel conveyors, to the output conveyor.

The transiting articles have to be guided and preferably accompanied towards the accumulation table or the output conveyor.

Therefore, said diverter apparatus is movable along the supply or output conveyor so as to arrange the transferring channel in communication with each accumulation channel.

The diverter apparatus generally comprises an outer device and an inner device, arranged so as to define a transferring channel for the passage of the articles.

The outer device and the inner device each comprise a respective engagement surface opposite one another, which respectively define an inner and an outer side walls of the transferring channel, which are adapted to engage on the body of said articles.

The diverter apparatus can be of a simple, unexpensive type, i.e., with the engagement surface of the outer device and the engagement surface of the inner device that is not movable in the product advancing direction.

Or, the diverter apparatus can be of a more complex type, i.e., with the engagement surface of the outer device and the engagement surface of the inner device of a movable type in the product advancing direction.

In such a case, said engagement surfaces are generally straps that translate in the product transferring direction.

Both the diverter apparatus of a simpler and more complex types has to be able to work with articles that differ both in shape and size.

In particular, the engagement surfaces have to be configurated so as to remain in contact with the article during the transit inside the diverter apparatus.

Since the engagement surfaces are of a complex shape, and generally provide for both rectilinear and curvilinear lengths, a format change provides for the replacement of one or more components.

In fact, solutions are known, whereby, upon an article change, provide for a format change, which involves replacing the whole apparatus with an apparatus that is suitable to the new article, or may involve the replacement of one of the two, inner or outer, devices.

For example, document EP4041662 describes a simplified format change which provides for the replacement of a portion of the inner device.

Therefore, the known format changes have the drawback of requiring a plurality of replacement equipment.

Especially in the case that the production line has to process may different kinds of articles, equipment for each type of article needs to be provided.

In the case that new types of articles have to be processed, it is necessary to purchase new equipment.

Furthermore, as a result, a format change of a known type may require long downtimes of the articles accumulation zone in order to perform the replacement of the various equipment.

A further drawback is related to the fact that said format change operation cannot be performed automatically, and it always has to be performed by an operator.

### DISCLOSURE AND ADVANTAGES OF THE INVENTION

The technical problem underlying the present invention is to provide to the art an improved diverter apparatus that is structurally and functionally devised to overcome one or more of the limitations set forth above with reference to the mentioned prior art.

Within the scope of the above-mentioned problem, a main object of the invention is to develop a diverter apparatus that allows processing different types of articles passing from one to the other in a simple and quick manner.

A further object of the invention is also to provide to the art a diverter apparatus within the scope of a solution that makes the format change easier.

Object of the present invention is also to allow making a diverter apparatus that does not require the presence of an operator for a format change.

In particular, it is an object of the invention a diverter apparatus adapted to divert a flow of articles from a conveyor to a plurality of accumulating/transferring channels, and vice versa.

Said diverter apparatus preferably comprises an outer device and an inner device arranged so as to define a transferring channel for the passage of the articles.

Said diverter apparatus is preferably movable along the conveyor so as to arrange the transferring channel in communication with each accumulating/transferring channel.

In particular, said outer device and/or inner device comprises an adjusting device to change the size of said transferring channel and adapt it to the article size.

Said outer device and said inner device preferably comprise a respective engagement surface which are mutually opposite, which respectively define an outer and an inner side walls of the transferring channel, which are adapted to engage on the body of said articles.

Said engagement surface of the outer device and/or said engagement surface of the inner device is preferably operatively associated to the adjusting device to translate said outer and/or inner side walls closer to/farther from one another.

Said engagement surface of the outer device and/or said engagement surface of the inner device preferably comprises at least one input sector and one output sector, each comprising at least one curvilinear surface portion and preferably one or more rectilinear surface portions adjacent thereto.

Preferably, the curvilinear surface portion is a portion of a circumference.

The adjusting device is preferably adapted to translate the opposite input sectors closer to/farther from one another along an input direction parallel to the straight line that joins the centres of the respective opposite curvilinear surfaces.

The adjusting device is preferably adapted to translate the opposite output sectors closer to/farther from one another along an output direction parallel to the straight line that joins the centres of the respective opposite curvilinear surfaces.

Said outer device and/or inner device preferably comprises advancing means that are operatively associated to said engagement surface of the outer device and/or to said engagement surface of the inner device to move said outer and/or inner side walls of the transferring channel in an articles advancing direction.

Said outer device and/or said inner device preferably comprises a flexible member, in which a portion of said flexible member faces inwardly relative to the transferring channel and defines said engagement surface of the outer device and/or said engagement surface of the inner device.

Said flexible member preferably has a closed loop configuration.

The advancing means of the outer device and/or of the inner device are preferably operatively associated to said flexible member of the outer device and/or to said flexible member of the inner device for the movement thereof, in particular to advance endlessly in an articles advancing direction.

The advancing means of said flexible member of the outer device and the advancing means of said flexible member of the inner device can preferably vary their advancing speed independently of one another.

Said outer device and/or said inner device preferably comprises a guide member onto which the flexible member rests, in particular at the portion of said flexible member defining the engagement surface of the outer device and/or the engagement surface of the inner device.

The guide member of the outer device and/or the guide member of the inner device is preferably operatively associated to the adjusting device of the outer device and/or to the adjusting device of the inner device to narrow/broaden the transferring channel.

The outer device and/or the inner device preferably comprise tensioning means that engage on the flexible member of the outer device and/or on the flexible member of the inner device to compensate for its elongation/shortening, when the guide member of the outer device and/or the guide member of the inner device moves to narrow/broaden the transferring channel.

The guide member of the outer device and/or the guide member of the inner device preferably comprises an input guide assembly and an output guide assembly, each comprising at least one curvilinear guide portion and preferably one or more rectilinear guide portions adjacent thereto.

The adjusting device of the outer device and/or the adjusting device of the inner device is preferably adapted to translate the opposite output guide assemblies closer to/farther from one another along the input direction parallel to the straight line that joins the centres of the respective opposite curvilinear guides and/or is adapted to translate the opposite output guide assemblies translating them closer to/farther from one another along the output direction parallel to the straight line that joins the centres of the respective opposite curvilinear guides.

The adjusting device of the outer device and/or the adjusting device of the inner device preferably comprises actuating means, of the outer device and/or actuating means, of the inner device of an automatic type, for example, of the electrical or pneumatic type, or of a manual type, e.g., handles or small steering wheels.

It is an object of the invention also an accumulator comprising at least one conveyor and a plurality of accumulating/transferring channels onto which a diverter apparatus operates, which is adapted to divert a flow of articles from the conveyor to the plurality of accumulating/transferring channels, and vice versa, in which said diverter apparatus is made according to the preceding features.

Such and other objects are achieved by virtue of the characteristics of the invention that are set forth in the independent claims. The dependent claims outline preferred and/or particularly advantageous aspects of the invention.

Said objects and advantages are all achieved by the diverter apparatus, which is the subject-matter of the present invention, which is characterized by what is provided for in the claims set forth below.

### BRIEF DESCRIPTION OF THE FIGURES

This and other characteristics will be further highlighted by the following description of some embodiments, illustrated purely by way of example and not by way of limitation in the attached drawing tables.
- Fig. 1: illustrates an axonometric view of an accumulator with diverter apparatus, accumulation table, input and output conveyors;

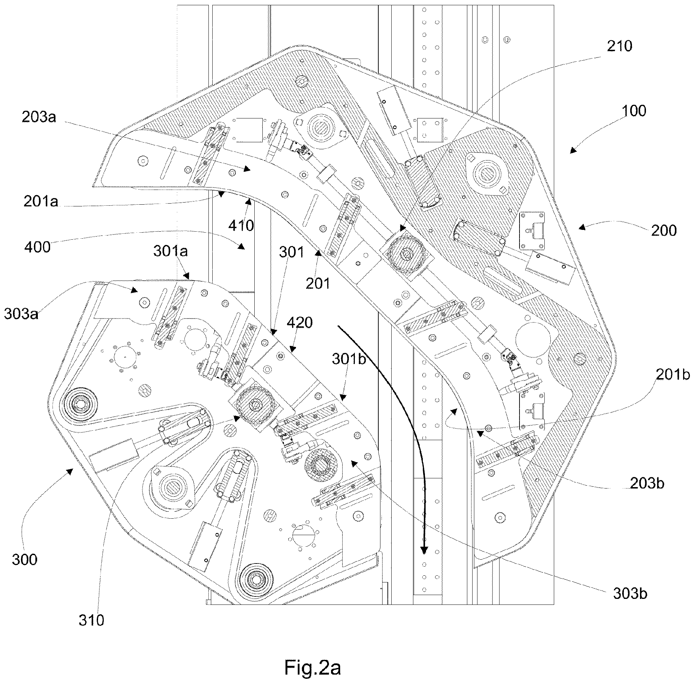

- Fig. 2a: illustrates a plan view of the diverter apparatus;

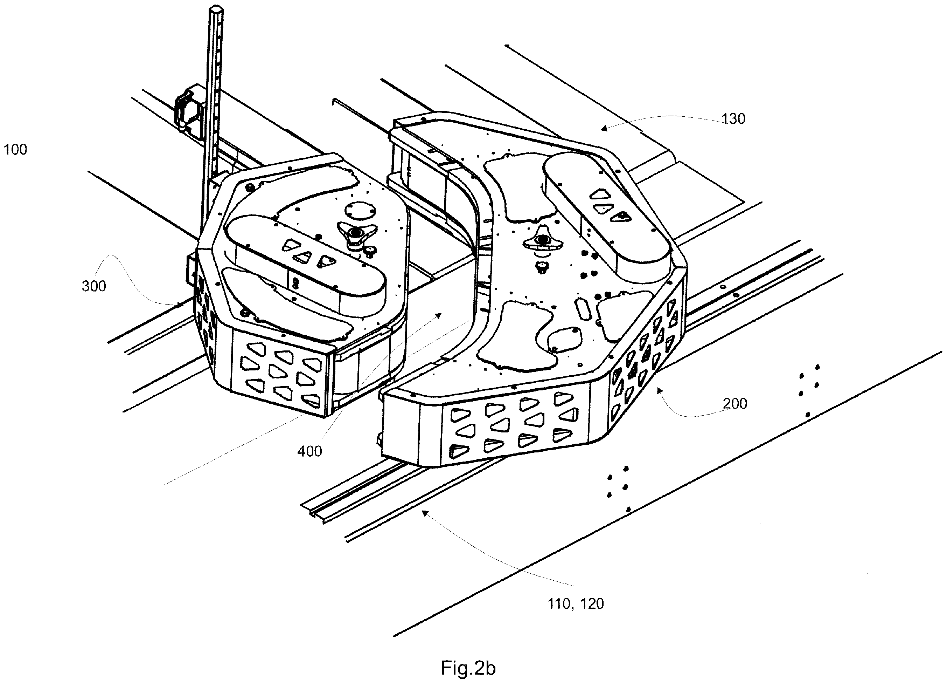

- Fig. 2b: illustrates an axonometric view of the diverter apparatus;

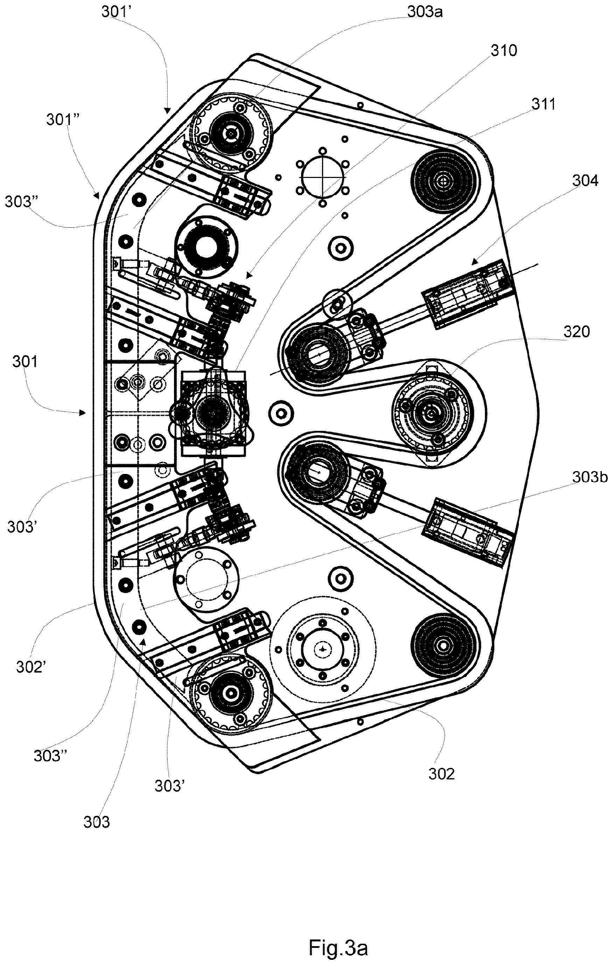

- Fig. 3a: illustrates a plan view of the inner device;

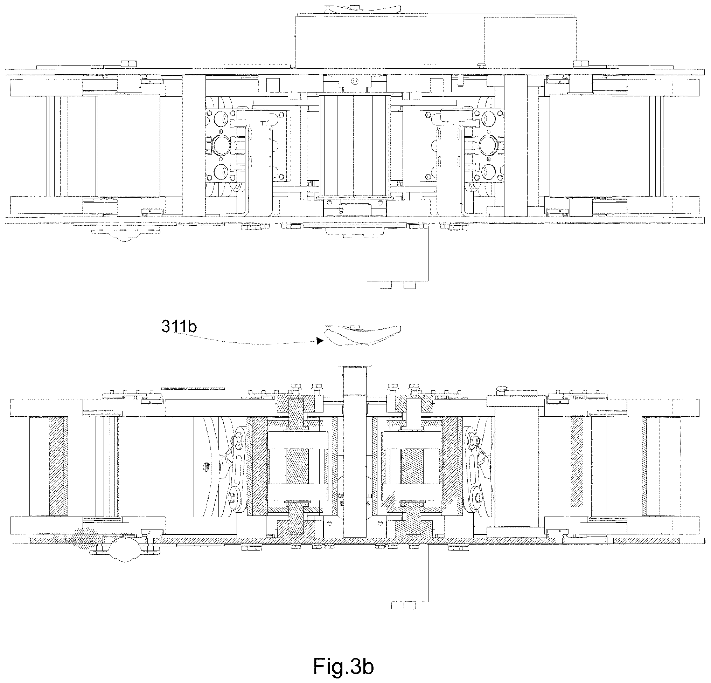

- Fig. 3b: illustrates a side view of the inner device;

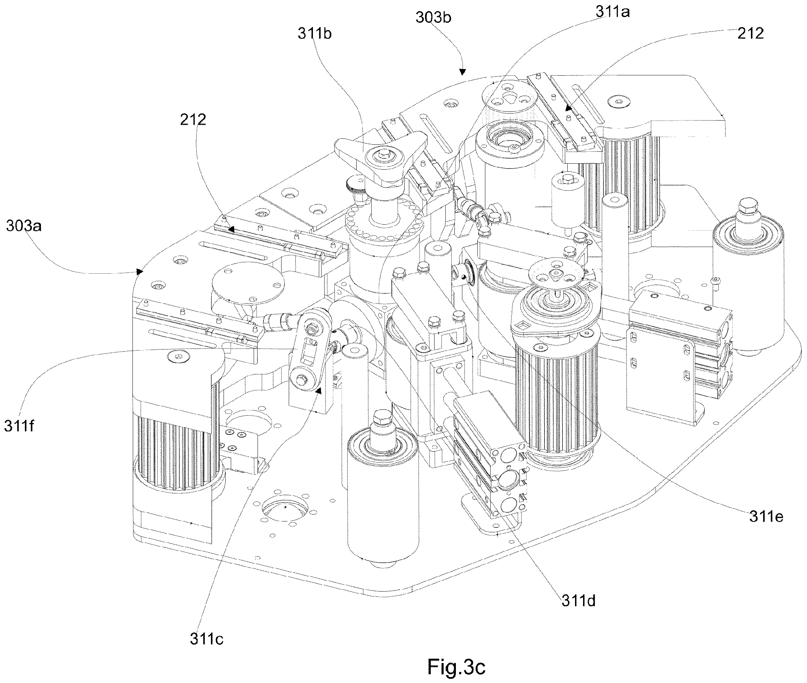

- Fig. 3c: illustrates an axonometric view of the inner device;

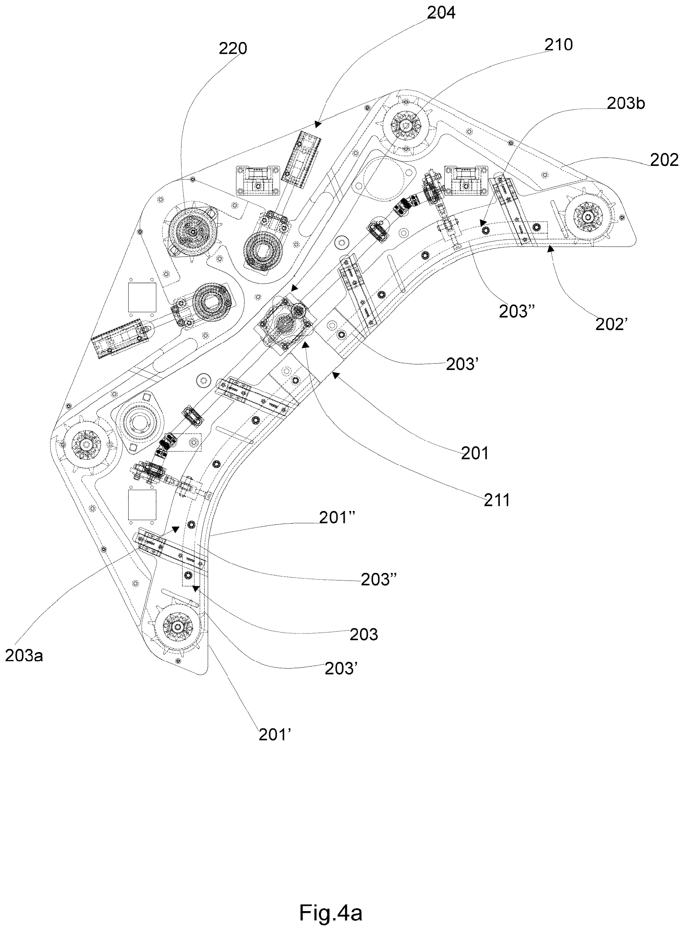

- Fig. 4a: illustrates a plan view of the outer device;

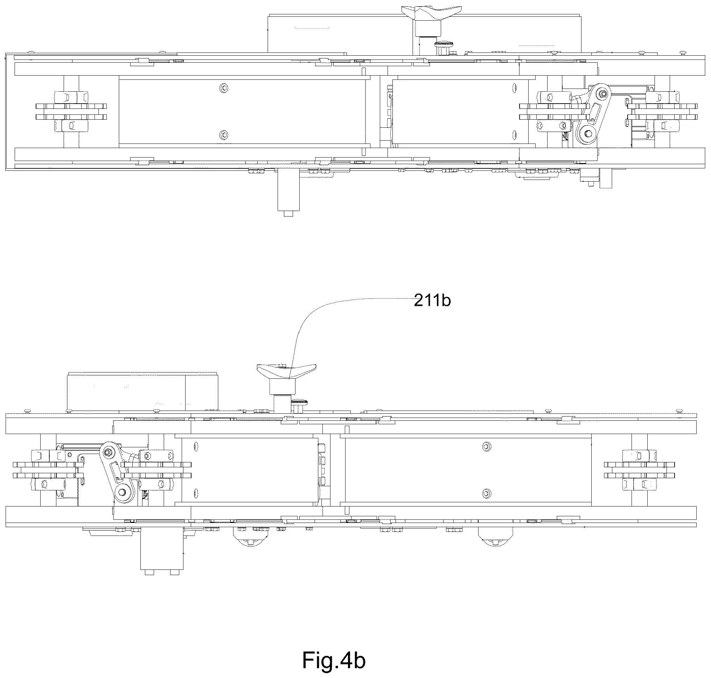

- Fig. 4b: illustrates a side view of the outer device;

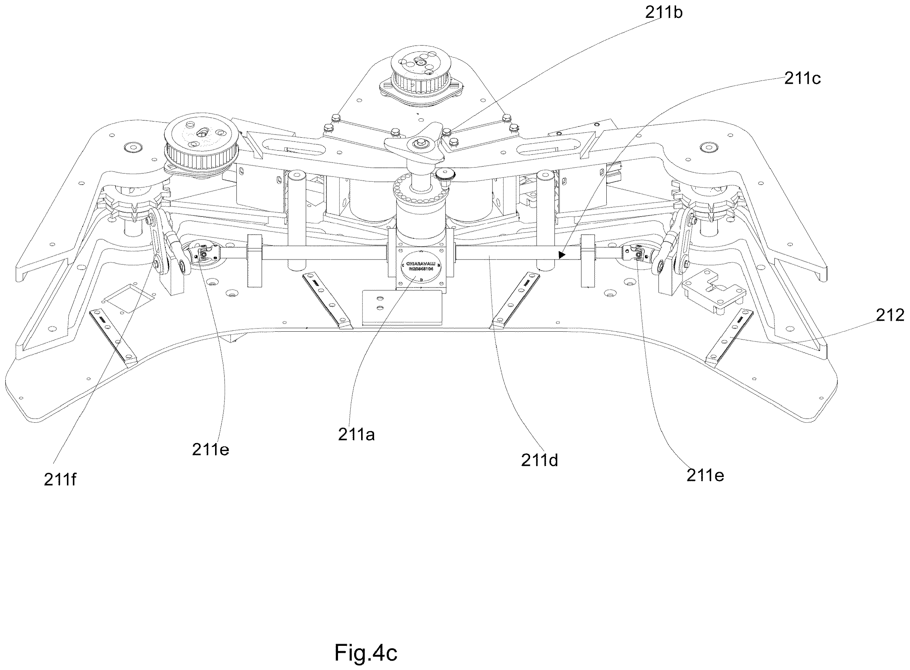

- Fig. 4c: illustrates an axonometric view of the outer device.

### DESCRIPTION OF THE INVENTION

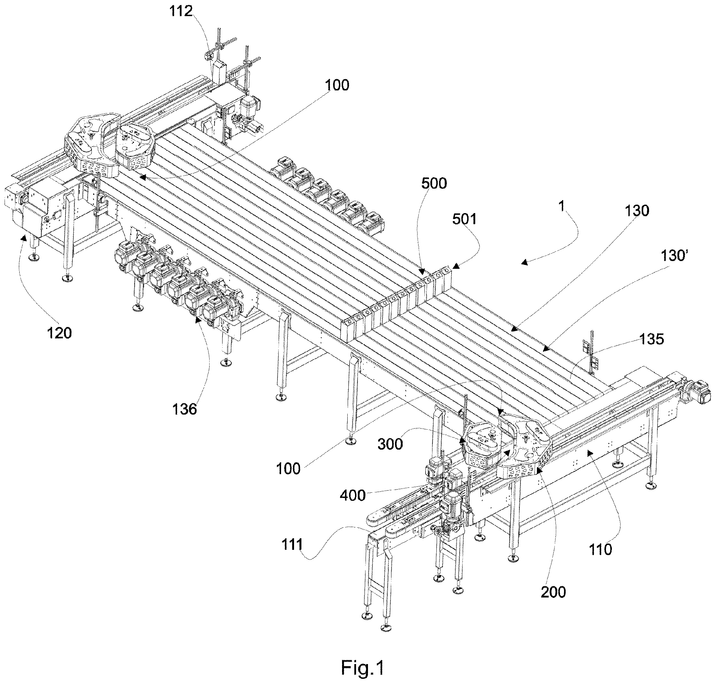

With reference to Fig. 1, an accumulator is depicted, which is generally indicated with 1, it comprises a diverter apparatus 100 configured to deviate a flow of articles 500 from a conveyor 110, 120 to a plurality of accumulating/transferring channels 130 of said articles 500.

By the term conveyor 110, 120, both the input conveyor belt 110 for supplying the articles 500 to the accumulating/transferring channels 130, and the output conveyor belt 120 for evacuating the articles 500 from the accumulating/transferring channels 130 are meant.

In particular, said articles 500, e.g., bottles, cans, vases, glasses, bricks, and more generally containers, pass onto conveyors that are part of lines adapted to the production and/or filling and/or packaging and/or storage of said articles 500.

During operation, the production and/or filling and/or packaging and/or storage machines, of said lines, may have downtimes for the replenishment of consumables, or for short maintenances; these stops of the single machines, if prolonged, may cause consequent stops of the production line, thus compromising its productivity.

In order to avoid this problem, action is taken by creating articles accumulation/transfer zones 500, inserting accumulators 1 between a machine and the next one.

Said accumulators 1 of articles 500 must be able to contain the articles 500 processed by the machines upstream, during the downtime of the machines downstream, subsequently returning the articles 500 to the line upon the re-start of the above-mentioned machines downstream.

In particular, the diverter apparatus 100 diverts the flow of articles 500 on a plurality of accumulating/transferring channels 130, when the machines downstream the accumulator 1 are inactive.

The accumulator 1 depicted in Fig. 1 is only an example of a possible application of the diverter apparatus 100.

In fact, said diverter apparatus 100 can be used also as a partitioner, in which a row of articles 500 is divided into a plurality of rows, and vice versa.

In fact, in the production and/or filling and/or packaging and/or storage lines between a machine and the next one, it can be necessary to vary the number of rows of articles entering a machine to accommodate the number of supply channers for which said machine is configured.

The diverter apparatus 100 operating as a partitioner transfers the articles 500, arranged on a row 501 dividing them into a plurality of transferring channels 130 and arranging them on multiple parallel rows 501. The implementation examples of said plurality of accumulating/transferring channels 130 that is described herein below is intended as non-limiting with reference to the attached drawings.

Said accumulating/transferring channels 130 can be considered both those of an accumulator 1, as depicted in Fig. 1, and those of a partitioner not specifically depicted in the Figure.

Said plurality of accumulating/transferring channels 130 can be achieved by a plurality of conveyors placed side by side or preferably, as depicted in Fig. 1, it can be achieved by a single accumulation/transferring table 130'.

Said table 130' is configured to arrange and transfer the articles 500 according to a plurality of mutually parallel rows 501.

As shown in Fig. 1, the accumulation/transferring table 130' may comprise a structure with multiple accumulation/transferring chains 135 arranged mutually parallel.

Each accumulation/transferring chain 135 defines the accumulating/transferring channel 130.

Fig. 1 shows a number of accumulation/transferring chains 135, although any other amount can be devised, this depending on the accumulation/transfer ability that is required by the line.

According to a preferred embodiment, said accumulation/transferring chains 135 advance independently one of another, so that each di them is able to receive and evacuate a single row 501 of articles 500, independently of the other ones.

In Fig. 1, a possible embodiment is depicted, in which the table 130' provides for a plurality of towing means 136, in which each is operatively connected to a single accumulation/transferring chain 135 to carry out the handling thereof.

In order not to be constrained by the construction form of the accumulation/transferring zone, reference will be generally made to accumulation channels 130 herein below.

As depicted in Fig. 1, said input 110, or output 120 conveyor is arranged orthogonal to the accumulating/transferring channels 130, i.e., so that the articles advancing direction 500 on the conveyor 110, 120 is orthogonal to the articles advancing direction 500 on the accumulating/transferring channels 130.

According to an aspect of the invention, the input 110 and/or output 120 conveyor comprises an advancing chain 111, 121 of a type known to those skilled in the art; preferably said advancing chain 111, 121 extends across the entire width of the accumulating/transferring channels 130, as depicted in Fig. 1.

Said articles 500, passing from the input conveyor 110 to the accumulating/transferring channels 130, or from the accumulating/transferring channels 130 to the output conveyor 120, are preferably diverted by 90°.

In Fig. 1, an axonometric view of an accumulator 1 is depicted, onto which a diverter apparatus 100 is installed on both the input conveyor 110 and the output conveyor 120.

Herein below, when a diverter apparatus 100 is referred to, reference will be made indistinctly to both the operative one at the input conveyor 110 and the output conveyor 120 being structurally identical, even if not specular or simply rotated by 180°.

According to an aspect of the invention, the diverter apparatus 100 is movable along the conveyor 110, 120 so that it is able to transfer such articles 500 between the conveyor 110, 120 and any one of the accumulating/transferring channels 130.

Said diverter apparatus 100 is configured to preferably divert the articles 500 by 90°, passing from the conveyor 110 120 to the accumulating/transferring channels 130.

Said diverter apparatus 100 preferably comprises an outer device 200 and an inner device 300.

In particular, the outer device 200 and the inner device 300 are positioned so as to define a transferring channel 400 for the passage of the articles 500.

Said outer device 200 and inner device 300 are configurated to define the transferring channel 400 so as to divert the articles by an angle of preferably 90°.

In particular, the outer device 200 and the inner device 300 translate along the conveyor 110, 120 so as to arrange the transferring channel 400 in communication with each accumulating/transferring channel 130.

According to a preferred form, the outer device 200 and the inner device 300 are positioned so that the transferring channel 400 is centered on the advancing chains 111, 112.

The outer device 200 and the inner device 300 are preferably positioned so that the transferring channel 400 is centered with the accumulating/transferring channel 130.

According to a preferred embodiment, the outer device 200 and the inner device 300 translate together.

In particular, the outer device 200 and the inner device 300 are mechanically connected with the same translating devices of the diverter apparatus 100.

Said translating devices can be located below, or above the conveyor 110, 120.

Said translating devices can comprise at least one motor or gearmotor transmitting the motion to transmission members, such as pulleys and belts, or pinions and chains, etc.

Said translating devices can further comprise members to keep the outer device 200 and the inner device 300 in guidance during translation.

However, it is understood that what has been described above is of an exemplary, non-limiting value; in fact, a number of solutions exist, which those skilled in the art can identify in order to move, keep in guidance, and support the diverter apparatus 100 at the conveyors 110, 120.

Therefore, possible detail variations that should be required for technical and/or functional reasons, are herefrom considered to fall within the same protection scope.

It is an object of the invention that said outer device 200 and/or inner device 300 comprises an adjusting device 210, 310 to change the size of said transferring channel 400 and adapt it to the article 500 size.

This allows adapting the diverter apparatus 100 to the different types of shape and size of the articles 500.

The presence of an adjusting device 210, 310 allows adjusting the size of the transferring channel 400 without having to replace components.

According to an aspect of the invention, said outer device 200 and said inner device 300 comprise respective engagement surfaces 201, 301, which are mutually opposite.

In particular, the engagement surface 201, of the outer device 200 and the engagement surface 301, of the outer device 300 respectively define an outer side wall 410 and an inner side wall 420 of the transferring channel 400, which are adapted to engage on the body of said articles 500.

In particular, the outer side wall 410 and the inner side wall 420 contact the body of the article to guide it in passing from the conveyor 110, 120 to the accumulating/transferring channel 130.

According to a preferred embodiment, said engagement surface 201 of the outer device 200 and/or said engagement surface 301 of the inner device 300 is operatively associated to the adjusting device 210, 310, in particular to translate said outer and/or inner side walls 410, 420 closer to/farther from one another.

According to possible embodiments, it can translate only the engagement surface 201 of the outer device 200 or only the engagement surface 301 of the inner device 300, or both.

A preferred solution provides for moving both the engagement surfaces 201, 301, while keeping the axis of the transferring channel 400 in a stationary position.

In such a manner, the transferring channel 400 remains centered on the advancing chains 111, 112 and/or on the accumulating/transferring channel 130.

This allows adjusting the engagement surface 201 and/or 301 without having to move the entire outer device 200 and/or the entire inner device 300.

By virtue of this solution, the adjustment occurs by bringing only the engagement surfaces 201 and/or 301 closer to/farther from one another, which reduces the times and stresses involved.

Said engagement surface 201 of the outer device 200 and/or said engagement surface 301 of the inner device 300 can comprise both rectilinear surface portions 201', 301' and/or curvilinear surface portions 201", 301".

The configuration can depend, for example, on the distance and/or kind of the conveyors 110, 120 and the accumulating/transferring channels 130.

The engagement surface 201 of the outer device 200 is preferably divided into at least one input sector 201a, and an output sector 201b, each comprising at least one curvilinear surface portion 201" preferably adjacent to one or more rectilinear surface portions 201'.

In particular, in the Figure a non-binding embodiment of the outer device 200 is depicted, in which the engagement surface 201, from the input to the output, provides, in sequence, a first rectilinear surface portion 201', a second curvilinear surface portion 201", a third rectilinear surface portion 201', a fourth curvilinear surface portion 201", and a fifth rectilinear surface portion 201'.

The engagement surface 301 of the outer device 300 is preferably divided into at least one input sector 301a, and an output sector 301b, each comprising at least one curvilinear surface portion 301" preferably adjacent to one or more rectilinear surface portions 301'.

In the Figure, also a non-binding embodiment of the inner device 300 is depicted, in which the engagement surface 301, from the input to the output, provides, in sequence, a first rectilinear surface portion 301', a first curvilinear surface portion 301", a second rectilinear surface portion 301', a second curvilinear surface portion 301", and a third rectilinear surface portion 301'.

In the outer device 200, the curvilinear surface portions 201" are preferably concave.

In the inner device 300, the curvilinear surface portions 301" are preferably convex.

In particular, the convex curvilinear surface portions 301" of the inner device 300 face the concave curvilinear surface portions 201" of the outer device 200.

The rectilinear surface portions 301' of the inner device 300 preferably face the rectilinear surface portions 201' of the outer device 200.

The curvilinear portions 201", 301" are preferably portions of a circumference.

Some of said adjacent rectilinear 201', 301' or curvilinear 201", 301" surface portions can preferably be mechanically connected to one another.

According to a preferred embodiment, the adjusting device 210, 310 is configured so that the opposite curvilinear surface portions 201", 301" and all of the opposite rectilinear surface portions 201', 301' of the opposite input sectors 201a, 301a translate closer to/farther from one another along an input direction X parallel to the straight line that joins the centers of the opposite curvilinear surfaces 201", 301".

In the same manner, the opposite curvilinear surface portions 201", 301" and all of the opposite rectilinear surface portions 201', 301' of the opposite output sectors 201b, 301b translate closer to/farther from one another along an output direction X' parallel to the straight line that joins the centers of the opposite curvilinear surfaces 201", 301".

In other words, the input sector 201a, 301a and the output sector 201b, 301b translate according to the bisector of the angle subtended by the curvilinear surface portion 201", 301", in particular circumference, comprised therein.

As a result, the translation of the input sector 201a, 301a, and the output sector 201b, 301b along the input X and output X' directions also entails an elongation/shortening of said engagement surface 201, 301 in an articles advancing direction 500 due to the fact that the input sector 201a, 301a moves closer to/farther from the output sector 201b, 301b in an articles advancing direction 500.

As regards the operative configuration of said engagement surface 201 of the outer device 200 and/or said engagement surface 301 of the inner device 300, particularly preferred embodiments can be provided for.

For instance, in a first solution, the engagement surface 201 of the outer device 200 and the engagement surface 301 of the inner device 300 are not movable in the product advancing direction.

A second alternative solution can provide for the engagement surface 201 of the outer device 200 not to be movable, while the engagement surface 301 of the inner device 300 is movable in a product advancing direction, or vice versa.

Alternatively, in a third solution, the engagement surface 201 of the outer device 200 and the engagement surface 301 of the inner device 300 are movable in the product advancing direction.

The first solution is simpler and less expensive, and the engagement surface 201, 301 does not go with the articles 500 during the transfer thereof, i.e., the articles 500 crawl against the engagement surface 201, 301 during the transfer between conveyor 110, 120 and accumulating/transferring channels 130.

As will be better explained herein below, both with the first and the second solution, the orientation of the articles 500 as the transferring channel 400 dimensions change cannot be ensured.

The third solution is more complex, yet more reliable, whereby both the engagement surfaces 201, 301 translate according to the advancing direction of the article 500. In such a case, the engagement surfaces 201, 301 accompany the articles 500 during the transfer thereof.

In fact, the articles 500 do not crawl against the engagement surface 201, 301 during the transfer between conveyor 110, 120 and accumulating/transferring channels 130, since said engagement surface 201, 301 moves integrally with said articles 500 going with them during said transfer.

In order to achieve the solution with a movable engagement surface 201, 301, the outer device 200 and/or inner device 300 comprises advancing means 220, 320.

Said advancing means 220, 320 are operatively associated to said engagement surface 201 of the outer device 200 and/or to said engagement surface 301 of the inner device 300.

This allows moving said outer 410 and/or inner 420 side walls of the transferring channel 400 in an articles advancing direction 500.

Therefore, said engagement surface 201 of the outer device 200 and/or said engagement surface 301 of the inner device 300 accompanies the article 500, moving with it, during the transit inside the diverter apparatus 100.

This facilitates the advancement of the article 500 in passing between the conveyor 110, 120 and the accumulating/transferring channels 130, and prevents the article 500 from being pushed by the articles 500 upstream.

Furthermore, this prevents the articles 500 from crawling on the outer 410 and/or inner 420 side walls of the transferring channel 400.

These aspects ensure the integrity of the articles 500 during the passage.

The advancing means 220 of the outer device 200 are preferably independent of the advancing means 320 of the inner device 300 and are preferably configured to be able to be managed in s related manner.

This allows, as the dimensions of the transferring channel 400 change, to manage the advancement of the engagement surfaces 201, 301 with different speeds, preferably related one to the other, to accommodate the new format of the articles 500.

By virtue of this aspect, it is possible to keep the proper orientation of non-cylindrical products that need a constant, defined orientation.

A preferred embodiment of advancing of said engagement surface 201 of the outer device 200 and/or of said engagement surface 301 of the inner device 300 is described herein below and depicted in the Figures.

In particular, said outer device 200 and/or said inner device 300 comprises a flexible member 202, 302.

In particular, a portion of said flexible member 202', 302' faces inwardly relative to the transferring channel 400 and defines said engagement surface 201 of the outer device 200 and/or said engagement surface 301 of the inner device 300.

Said flexible member 202, 302 preferably has a closed loop configuration, as outlined in the Figures.

According to an advantageous aspect of the invention, the advancing means 220 of the outer device 200 are operatively associated to said flexible member 202 of the outer device 200.

The advancing means 320 of the inner device 300 and/or are also preferably operatively associated to said flexible member 302 of the inner device 300.

This allows the flexible member 202, 302 advancing endlessly, since it is configurated as a closed loop. In particular, the handling direction is such that the portion of said flexible member 202', 302' facing inwardly of the transferring channel 400 moves in an articles advancing direction 500.

Therefore, since the outer device 200 is opposite the inner device 300, the flexible member 202 of the outer device 200 will rotate clockwise, and the flexible member 302 of the outer device 300 will rotate counterclockwise, or vice versa.

Advantageously, the flexible member 202 of the outer device 200 and the flexible member 302 of the inner device 300 have different advancing speeds, to make so that the article 500 advances without rotating about a symmetry axis thereof.

In fact, the advancing means 220, of the outer device 200 are preferably mechanically independent of the advancing means 320 of the inner device 300.

Advantageously, the operation of the advancing means 220, of the outer device 200 and the advancing means 320 of the inner device 300 is operatively related, to make so that the article 500, which is in contact with the flexible members 202, 302, advances without rotating.

This operation is particularly advantageous when the articles 500 have a non-axisymmetric configuration and need a well-defined advancement orientation.

Also the format change, i.e., the change in dimension of the transferring channel 400, is made more efficient by the possibility to adjust the advancement speed of the flexible members 202 of the outer device 200, independently of the advancement speed of the flexible members 302 of the inner device 300, thus allowing to find the proper operation for each dimension and shape of an article 500.

The outer device 200 preferably comprises tensioning means 204, which engage on the flexible member 202.

The inner device 300 preferably comprises tensioning means 304, which engage on the flexible member 302 of the inner device 300.

By virtue of said tensioning means 204, 304, it is possible to compensate the elongation/shortening of the flexible member 202, 302, when the outer 410 and/or inner 420 side walls of the transferring channel 400 are displaced to carry out the format change.

In particular, when the transferring channel 400 enlarges, the flexible member 202, 302 is loose, and the tensioning means 204, 304 act to bring it back to the proper tension.

Vice versa, when the transferring channel 400 narrows, the flexible member 202, 302 presses onto the tensioning means 204, 304 to recover the length it requires to reach the new position.

Said tensioning means 204, 304, can have an operation of a pneumatic, hydraulic, or spring type, etc.

The several types of tensioning means 204, 304 will be not described in detail, since they are known to those skilled in the art, and all of them fall within the protection scope of the invention.

An embodiment provides for, in the outer device 200 and/or the inner device 300, that the flexible member 202, 302 is a toothed belt.

In such a case, the advancing means 220, 320 can comprise a pulley operatively associated to a motor or gearmotor.

The toothed belt is preferably positioned so that the part facing inwardly of the transferring channel 400, i.e., the surface contacting the articles 500 is smooth and not toothed.

An alternative embodiment provides for, in the outer device 200 and/or the inner device 300, that the flexible member 202, 302 is a modular chain, for instance, the types used for conveyor belts.

In such a case, the advancing means 220, 320 can comprise a pinion or crown operatively associated to a motor or gearmotor.

The most suitable flexible member 202, 302 mainly depends on the type of articles 500 to be transferred.

In the Figure, an embodiment is depicted, which provides for, in the outer device 200, that the flexible member 202 is a modular chain, and in the inner device 300, the flexible member 302 is a strap.

To improve adhesion and sliding friction, and to absorb the impact with the articles 500, said flexible member 202 of the outer device 200 and/or said flexible member 302 of the inner device 300 preferably has a surface contacting the articles 500 of a deformable type.

In fact, the flexible member 202, 302 may have a contact surface provided with rubber or foam, etc.

This allows a better contact with the articles 500 and promotes the advancement thereof.

In the Figure, an embodiment is depicted, which provides for the modular chain of the outer device 200 comprises rubberised dowels to optimise the contact with the articles 500.

According to an aspect of the invention, said outer device 200 and/or said inner device 300 comprise a guide member 203, 303, onto which the flexible member 202, 302 rests.

This allows maintaining the flexible members 202, 302 in a proper position during the advancement thereof.

In particular, said guide member 203, 303 is at least positioned at the portion of said flexible member 202', 302' defining the engagement surface 201 of the outer device 200 and/or the engagement surface 301 of the inner device 300.

Advantageously, the guide member 203 of the outer device 200 and/or the guide member 303 of the inner device 300 is operatively associated to the adjusting device 210 of the outer device 200 and/or to the adjusting device 310 of the inner device 300 to narrow/broaden the transferring channel 400.

The handling of the guide member 203 of the outer device 200 and/or of the guide member 303 of the inner device 300 causes at least the portion of said flexible member 202', 302' defining the engagement surface 201 of the outer device 200 and/or the engagement surface 301 of the inner device 300 to move.

A preferred embodiment provides that the guide member 203 of the outer device 200 and/or the guide member 303 of the inner device 300 comprises rectilinear guide portions 203', 303' and/or curvilinear guide portions 203", 303".

In particular, said rectilinear guide portions 203', 303' define the rectilinear surface portions 201', 301', while said curvilinear guide portions 203", 303" define the curvilinear surface portions 201", 301" of the engagement surface 201 of the outer device 200 and of the engagement surface 301 of the inner device 300

Some of said adjacent rectilinear guide portions 203', 303' and/or curvilinear guide portions 203", 303" can preferably be mechanically connected to one another in a locked manner and form a single guide assembly.

Not all of the adjacent rectilinear 201', 301' or curvilinear 201", 301" surface portions can be mechanically connected to one another in a locked manner, since the moving closer to/farther from so as to keep the dimension of the transferring channel 400 constant from beginning to end could not be carried out.

In fact, some of said rectilinear guide portions 203', 303' and/or curvilinear guide portions 203", 303" are preferably mechanically connected to the adjacent ones in a free or movable manner, to allow the elongation/shortening of the engagement surface 201 of the outer device 200 and/or the engagement surface 301 of the inner device 300.

According to a further alternative, some of the rectilinear guide portions 203', 303' and/or curvilinear guide portions 203", 303" are fully unconstrained one relative to the other.

The movement between adjacent portions allows the displacement of the guide member 203 of the outer device 200 and/or of the guide member 303 of the inner device 300, to narrow/broaden the transferring channel 400.

This movement involves not only an approaching/moving away of the guide member 203 of the outer device 200 relative to the guide member 303 of the inner device 300, but it also entails an elongation of the engagement surface 201, 301.

The displacement of the guide member 203 of the outer device 200 and/or of the guide member 303 of the inner device 300 involves a displacement of that portion of said flexible member 203', 302' which is in a resting position.

In the Figure, a preferred embodiment is depicted, in which the outer device 200 comprises an input guide assembly 203a, and an output guide assembly 203b which define the input sector 201a, and the output sector 201b.

In particular, in the outer device 200, each input 203a, and/or output 203b guide assembly comprises at least one curvilinear guide portion 203" preferably adjacent to one or more rectilinear guide portions 203'.

In the Figure, an input 203a, and/or output 203b guide assembly is depicted, which comprises in sequence a rectilinear guide portion 203', a curvilinear guide portion 203", and a rectilinear guide portion 203' mechanically integral to one another to form a single guide.

A rectilinear guide portion 203' can be present between the input guide assembly 203a, 203b.

In the Figure, a preferred embodiment is depicted, in which the inner device 300 comprises an input guide assembly 303a, and an output guide assembly 303b, which respectively define the input sector 301a, and the output sector 301b.

In particular, in the inner device 300, each input 303a, and/or output 303b guide assembly comprises at least one curvilinear guide portion 303" preferably adjacent to one or more rectilinear guide portions 303'.

In the Figure, an input 303a, and/or output 303b guide assembly is depicted, which comprises in sequence a rectilinear guide portion 303', a curvilinear guide portion 303", and a rectilinear guide portion 303' mechanically integral to one another to form a single guide.

A rectilinear guide portion 303' can be present between the input 303a, and the output 303b guide assembly.

In the outer device 200, the curvilinear guide portions 203" are preferably concave.

In the inner device 300, the curvilinear guide portions 303" are preferably convex.

In particular, the convex curvilinear guide portions 303" of the inner device 300 are opposite the concave curvilinear guide portions 203" of the outer device 200.

The rectilinear guide portions 303' of the inner device 300 are preferably opposite the rectilinear guide portions 203' of the outer device 200.

The curvilinear guide portions 203", 303" are preferably portions of a circumference.

According to a preferred embodiment, the adjusting device 210, 310 is configured so that the opposite curvilinear guide portions 203", 303" and all of the opposite rectilinear guide portions 203', 303' of the opposite input guide assemblies 203a, 303a translate closer to/farther from one another along the input direction X parallel to the straight line that joins the centers of the opposite curvilinear guides 203", 301".

In the same manner, the opposite curvilinear guide portions 203", 303" and all of the opposite rectilinear guide portions 203', 303' of the opposite output guide assemblies 203b, 303b translate closer to/farther from one another along the output direction X' parallel to the straight line that joins the centers of the opposite curvilinear guides 203", 303".

In other words, the input guide assembly 203a, 303a and the output guide assembly 203b, 303b translate according to the bisector of the angle subtended by the curvilinear guide portion 203", 303", in particular circumference, comprised therein.

As a result, the translation of the input guide assembly 203a, 303a, and of the output guide assembly 203b, 303b along the input X and output X' direction also entails an elongation/shortening of the engagement surface 201, 301 in an articles advancing direction 500 due to the fact that the input guide assembly 203a, 303a, moves closer to/farther from the output guide assembly 203b, 303b in an articles advancing direction 500.

Therefore, a gap can be formed between the input guide assembly 203a, 303 and the output guide assembly 203b, 303b, in particular when the transferring channel 400 narrows, but said gap does not cause any problems to the transit of the articles 500, since it is covered by the flexible member 202', 302'.

According to a preferred aspect, the adjusting device 210, 310 comprises actuating means 211, of the outer device 200 and/or actuating means 311, of the inner device 300.

Said actuating means 211, 311 are configured to move and lock in position the engagement surface 201 of the outer device 200 and/or the engagement surface 301 of the inner device 300.

Said actuating means 211, 311 are preferably automatic, for example, of the electrical or pneumatic type.

This solution allows changing the dimension of the transferring channel 400 in an automatized manner, preferably a recipe, as a function of the size of the article 500 to be processed.

Alternatively, said actuating means 211, 311 can be of a manual type, e.g., handles or small steering wheels, to implement a functional, yet less expensive, solution, as depicted in the Figure.

Said actuating means 211, 311 are shaped so as to operate on the guide member 203, 303 in particular on the input 203a, 303a, and output 203b, 303b guide assemblies so as to change the dimension of the transferring channel 400 to get the same dimension at all points, thus ensuring the proper guide of the article 500.

Said actuating means 211 are configured so as to concomitantly move and/or lock all the input 203a, and output 203b, guide assemblies of the outer device 200.

Said actuating means 311 are configured so as to concomitantly move and/or lock all the input 303a, and output 303b, guide assemblies of the outer device 300.

In the Figure, an embodiment is depicted, in which the actuating means 211, 311 comprise an angle drive 211a, 311a operatively connected to an engine or a handle 211b, 311b.

Said angle drive 211a, 311a sets a driving member 211c, 311c in motion.

The driving member 211c, 311c is mechanically and operatively connected to all the input 203a, 303a, and output 203b, 303b guide assemblies, and/or rectilinear guide portions 203', 303' and/or curvilinear guide portions 203", 303".

In the Figure, said driving member 211c, 311c preferably comprises a pin 211d, 311d projecting from the angle drive 211a, 311a which is put in rotation thereby.

Said driving member 211c, 311c may comprise joints and/or junctions 211e, 311e to reach all the input 203a, 303a, and output 203b, 303b guide assemblies, and/or rectilinear guide portions 203', 303' and/or curvilinear guide portions 203", 303" to be moved.

As depicted in the Figure, said driving member 211c, 311c may also comprise motion transformation means 211f, 311f, such as rods and connecting rods, to transform the rotational motion of the pin 211d, 311d into a rectilinear motion of the guide member 203, 303.

The adjusting device 210, 310 may comprise one or more positioning members 212 to allow a guided translation of the guide member 203, 303, in particular of all the input 203a, 303a, and output 203b, 303b guide assemblies, and/or rectilinear guide portions 203', 303' and/or curvilinear guide portions 203", 303".

Said positioning members 212 are preferably configurated so as to allow the displacement of the input guide assembly 203a, 303a, in an input direction X, and/or of the output guide assembly 203b, 303b in an output direction X'.

In particular, said one or more positioning members 212 mechanically associated to the input guide assemblies 203a, 303a, are arranged parallel to the direction X.

In particular, said one or more positioning members 212 mechanically associated to the output guide assemblies 203b, 303b are arranged parallel to the direction X.

However, it is understood that what has been described above is of an exemplary, non-limiting value, therefore, possible detail variations that should be required for technical and/or functional reasons, are herefrom considered to fall within the same protection scope.

Object of the invention is also the accumulator 1 comprising at least one conveyor 110, 120, and a plurality of accumulating/transferring channels 130 onto which a diverter apparatus 100 operates, adapted to divert a flow of articles 500 from the conveyor 110, 120 to the plurality of accumulating/transferring channels 130, and vice versa, in which said diverter apparatus 100 is made according to the characteristics described above.

Object of the invention is also a partitioner comprising at least one conveyor 110, 120, and a plurality of accumulating/transferring channels 130 onto which a diverter apparatus 100 operates, adapted to divert a flow of articles 500 from the conveyor 110, 120 to the plurality of accumulating/transferring channels 130, and vice versa, in which said diverter apparatus 100 is made according to the characteristics described above.

## Claims

1. A diverter apparatus (100) adapted to divert a flow of articles (500) from a conveyor (110, 120) to a plurality of accumulating/transferring channels (130), and vice versa, wherein said diverter apparatus (100) comprises an outer device (200) and an inner device (300) arranged so as to define a transferring channel (400) for the passage of the articles (500), said diverter apparatus (100) being movable along the conveyor (110, 120) so as to arrange the transferring channel (400) in communication with each accumulating/transferring channel (130), **characterized in that** said outer device (200) and/or inner device (300) comprises an adjusting device (210, 310) to change the size of said transferring channel (400) and to adapt it to the article (500) size.

2. The diverter apparatus (100) according to claim 1, wherein said outer device (200) and said inner device (300) comprise respective engagement surfaces (201, 301), which are mutually opposite, which respectively define an outer and an inner side walls (410, 420) of the transferring channel (400) which are adapted to engage on the body of said articles (500), said engagement surface (201) of the outer device (200) and/or said engagement surface (301) of the inner device (300) being operatively associated to the adjusting device (210, 310) to translate said outer and/or inner side walls (410, 420) closer to/farther from one another.

3. The diverter apparatus (100) according to claim 2, wherein said engagement surface (201) of the outer device (200) and/or said engagement surface (301) of the inner device (300) comprises at least one input sector (201a, 301a), and one output sector (201b, 301b), each comprising at least one curvilinear surface portion (201", 301"), and preferably one or more rectilinear surface portions (201', 301') adjacent thereto.

4. The diverter apparatus (100) according to claim 3, wherein the curvilinear surface portion (201", 301") is a portion of a circumference.

5. The diverter apparatus (100) according to any one of the claims 3 to 4, wherein the adjusting device (210, 310) is adapted to translate the opposite input sectors (201a, 301a) closer to/farther from one another along an input direction (X) parallel to the straight line that joins the centres of the respective opposite curvilinear surfaces (201", 301") and/or is adapted to translate the opposite output sectors (201b, 301b) closer to/farther from one another along an output direction (X') parallel to the straight line that joins the centres of the respective opposite curvilinear surfaces (201", 301").

6. The diverter apparatus (100) according to any one of the preceding claims, wherein said outer device (200) and/or inner device (300) comprises advancing means (220, 320) operatively associated to said engagement surface (201) of the outer device (200) and/or to said engagement surface (301) of the inner device (300) to move said outer and/or inner side walls (410, 420) of the transferring channel (400) in an articles advancing direction (500).

7. The diverter apparatus (100) according to any one of the claims 2 to 6, wherein said outer device (200) and/or said inner device (300) comprises a flexible member (202, 302) in which a portion of said flexible member (203', 302') faces inwardly relative to the transferring channel (400) and defines said engagement surface (201) of the outer device (200) and/or said engagement surface (301) of the inner device (300).

8. The diverter apparatus (100) according to claim 7, wherein said flexible member (202, 302) has a closed loop configuration.

9. The diverter apparatus (100) according to any one of the claims 7 to 8, wherein the advancing means (220, 320) of the outer device (200) and/or of the inner device (300) are operatively associated to said flexible member (202) of the outer device (200) and/or to said flexible member (302) of the inner device (300) for the movement thereof, in particular to advance endlessly in an articles advancing direction (500).

10. The diverter apparatus (100) according to any one of the claims 7 to 9, wherein the advancing means (220) of said flexible member (202) of the outer device (200) and the advancing means (320) of said flexible member (302) of the inner device (300) can vary their advancing speed independently of one another.

11. The diverter apparatus (100) according to any one of the claims 7 to 10, wherein said outer device (200) and/or said inner device (300) comprise a guide member (203, 303), onto which the flexible member (202, 302) rests, in particular at the portion of said flexible member (203', 302') defining the engagement surface (201) of the outer device (200) and/or the engagement surface (301) of the inner device (300).

12. The diverter apparatus (100) according to claim 11, wherein the guide member (203) of the outer device (200) and/or the guide member (303) of the inner device (300), is operatively associated to the adjusting device (210) of the outer device (200) and/or the adjusting device (310) of the inner device (300) to narrow/broaden the transferring channel (400).

13. The diverter apparatus (100) according to any one of the claims 11 to 12, wherein the guide member (203) of the outer device (200) and/or the guide member (303) of the inner device (300) comprises an input guide assembly (203a, 303a) and an output guide assembly (203b, 303b), each comprising at least one curvilinear guide portion (203", 303") and preferably one or more rectilinear guide portions (203' 303') adjacent thereto.

14. The diverter apparatus (100) according to claim 13, wherein the adjusting device (210) of the outer device (200) and/or the adjusting device (310) of the inner device (300) is adapted to translate the opposite input guide assemblies (203a, 303a) closer to/farther from one another along the input direction (X) parallel to the straight line that joins the centres of the respective opposite curvilinear guides (203", 301") and/or is adapted to translate the opposite output guide assemblies (203b, 303b) translating them closer to/farther from one another along the output direction (X') parallel to the straight line that joins the centres of the respective opposite curvilinear guides (203", 303").

15. The diverter apparatus (100) according to any one of the preceding claims, wherein the adjusting device (210) of the outer device (200) and/or the adjusting device (310) of the inner device (300) comprises actuating means (211), of the outer device (200) and/or actuating means (311), of the inner device (300) of an automatic type, for example, of the electrical or pneumatic type, or of a manual type, e.g., handles or small steering wheels.

16. An accumulator (1) comprising at least one conveyor (110, 120) and a plurality of accumulating/transferring channels (130) onto which a diverter apparatus (100) operates, which is adapted to divert a flow of articles (500) from the conveyor (110, 120) to the plurality of accumulating/transferring channels (130), and vice versa, wherein said diverter apparatus (100) is made according to the preceding claims.
